# EUROPEAN PATENT SPECIFICATION

(11) **EP 2 492 881 B1**
(45) Date of publication and mention of the grant of the patent: **12.04.2017**
(21) Application number: 12386006.6
(22) Date of filing: 22.02.2012
(51) Int. Cl.: G08B 13/16, G08B 25/08

(54) **System and method for anti-theft protection/alarm**
System un Verfahren zum Diebstahlschutz /Alarm
Système et méthode de protection anti-vol /alarme

(30) Priority: 24.02.2011 GR 2011100108
(43) Date of publication of application: 29.08.2012
(73) Proprietor: Infitheon Technologies, 15310 Agia Paraskevi Attikis (GR)
(72) Inventor: Tsampieris, Nikolaos, Dr., 15310 Agia Paraskevi Attikis (GR); Mourtsiadis, Ioannis, 15310 Agia Paraskevi Attikis (GR)
(74) Representative: Vourou, Triantafillia

(56) References cited:
- WO-A1-2009/104968
- US-A- 4 586 031
- US-A1- 2003 156 031

## Description

### Field of invention

The present invention refers to a system of anti-theft protection / alarm and management of a "smart home" as well as to a method of detection of intrusion of internal spaces.

### State of the art

The systems of anti-theft protection /alarm are structures which detect incidents of violation of internal spaces and notify for the incidents in question. There are two types of systems. One type is the wired systems, in which the interconnection between detectors and central alarm is implemented via wirings. Disadvantage of this type is the cost and the time of installation /relocation as well as the abundance of detectors. The second type are the wireless systems which do not require wirings, have however the disadvantage that they can be jammed/interfered easily via transmitter. A further problem is the need of power supply/battery for each individual detector.

The document US4586031 discloses an anti-theft protection / alarm system comprising:
a) a piezoelectric sensor to detect an audio signal
b) an amplifier to amplify the detected audio signal
c) a low-pass filter in the range of 0-20 Hz for passing the amplified audio signal in the range of 0-20 Hz and cutting-off of the amplified audio signal of higher frequency

### Object of present invention

Object of present invention is the development of a functional system of anti-theft protection /alarm which will overcome the abovementioned problems and which will be reliable with regard to the detection of incidents of violation against simple accidental incidents in the space under monitoring.

The present invention is defined by a system as claimed in claim 1 and a method as claimed in claim 7. Preferred embodiments are set out in the dependent claims. The present invention provides system of anti-theft protection /alarm which comprises:
a) a piezoelectric detector for the detection of audio signal
b) an amplifier for the amplification of audio signal
c) a low-pass active filter in the bandwidth of 0-20 Hz for the passing of the amplified signal in the bandwidth of 0-20 Hz and the cutting-off of the signal at higher frequencies
d) an amplifier of variable rate for the amplification of the filtered (infrasonic) signal
e) an analog to digital converter for the conversion of the re-amplified infrasonic signal into digital signal.
f) a processor for the processing and evaluation of digital signal in relation to the reference infrasonic signals, stored inside the memory of the processor, where the evaluation takes into consideration the time duration of the infrasonic signal, the level of the infrasonic signal, and the accumulated energy of the infrasonic signal
h) a means of communication.

The system of anti-theft protection/alarm of the present invention includes a conventional piezoelectric detector which detects audio signals of all frequencies. The piezoelectric detector converts the audio signal to electric signal, which afterwards is amplified via an amplifier. The degree of amplification does not constitute a critical parameter, however it is preferred to be at least 1000 times. Next the amplified electric signal is filtered via a low-pass filter of bandwidth 0-20 Hz. In this way, signals with frequency >20 Hz are being cut-off, and the signals which correspond to the infrasonic bandwidth (0-20 Hz) are the only ones preserved. The filter can be of any type known in the art, e.g., analog, 8-poles etc. Inevitably, the passage via the low-pass filter causes attenuation of the level of the signal.

For this reason the filtered signal is next re-amplified again via a variable-rate amplifier. In this way, the realised amplification is adapted to the degree of attenuation of the signal as this was caused by the low-pass filter, while at the same time the regulation of sensitivity and noise level becomes possible. The re-amplified analog signal is converted to digital via an analog to digital converter, thus in its digital henceforth form the signal can be processed by the processor, e.g., processing, storage, comparison with reference signals etc.

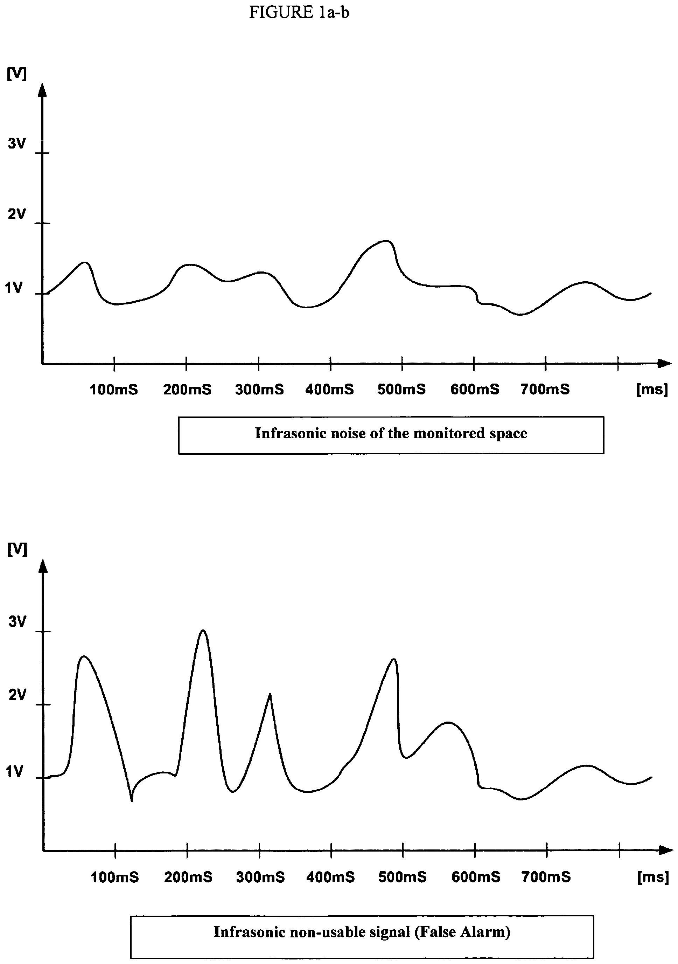

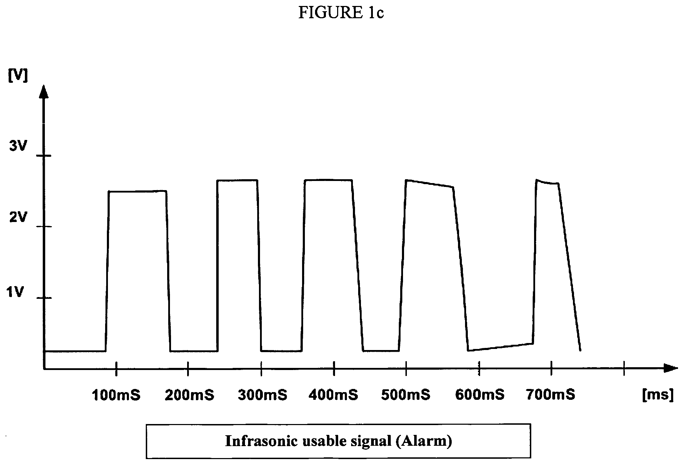

Each audio signal is characterized by the level and duration thereof (fig.1). From the graphic depiction of the level of audio signal versus time (duration of audio signal) it can, via integration, be calculated the energy content of the audio signal. These three parameters (level, duration, energy content) constitute a type of audio imprint which is characteristic for the incident which created the audio signal. In the present case, the processor processes, with the aid of software, the digital infrasonic signal with regard to the mentioned parameters and it creates an infrasonic imprint related with each incident. Following this, the processor compares the infrasonic imprint with infrasonic imprints of reference which have been stored beforehand in the memory of the processor. In this way, the processor will ascertain if the created infrasonic imprint is connected with "irregular" infrasonic incident which will be considered as incident of intrusion. In this case the system of anti-theft protection /alarm creates a signal of alarm notifying for the intrusion.

The patent application GB 2 451 241 presents a system of anti-theft protection /alarm based on infrasound, in which a comparison of digital imprint of infrasonic is being made with known imprints via recording of crossings of a detected infrasonic signal through defined thresholds of reference.

The system of anti-theft protection /alarm optionally includes a module for the activation or de-activation of the system remotely. This particular module performs the necessary actions upon the reception of message via a mobile telephone.

The system of anti-theft protection /alarm optionally may include an internal siren as means of alarm in the event of intrusion. In other application, the system may have output suitable for connection to external siren.

The system of anti-theft protection/alarm of present invention according to further application includes, as means of alarm, an SMS transmission and reception module for the notification for incidents of intrusion via SMS message. The messages are sent in the numbers of mobile telephones stored in the memory of the processor.

Moreover, the system of anti-theft protection /alarm further includes installation of telephone communication for the acoustic monitoring of the space remotely via mobile or fixed telephone. Thus in the event of intrusion, the user of the system will know via telephone communication with the system the situation which prevails in the space under monitoring. Moreover, the module of telephone communication of the system of anti-theft protection /alarm will allow the open communication with an individual in the space under monitoring. Thus, an individual at risk inside the space will be in position to communicate with an individual outsid this particular space.

According to a further implementation, the anti-theft protection / alarm may include a displacement sensor or acceleration sensor. The displacement sensor enables the detection of any shift from the sensor's position, e.g., when detached from its position, with the possibility of identifying its new position. The acceleration sensor is particularly useful in cases of people with disabilities. The anti-theft protection / alarm in one application can be worn by a person with special needs, e.g. hung around the neck or around the hand as a wrist-watch. An acceleration sensor built-in the anti-theft protection/alarm system will signal an alarm in case the sensor drops from the person's body or even when the person falls anywhere within the monitored space.

According to a further application the anti-theft protection / alarm system includes an alarm button for the deliberate generation of alarm and transmission of SMS message. This is especially useful for people still at risk within the area, as the alarm will generate an SMS message for people outside the area.

According to further implementation the anti-theft protection / alarm system includes an incorporated GPS system. This application is useful in cases of intrusion and theft of vehicles, as in this way the user will know at every moment the exact location of the stolen vehicle. Alternatively, the system of the present invention can provide the correct output for connection to external GPS system.

According to a further application the system of anti-theft protection / alarm of the present invention, as part of "smart home" design, includes built-in light sensor, temperature sensor, humidity sensor, etc. These sensors in another application may be external, connected to the system via 1-wire type connections. In these applications, if the signal of the mentioned sensors exceeds a predetermined threshold, the system will signal an alarm notifying the user of such an excess. Furthermore the system may include relay functions for enabling / disabling of these functions.

Naturally, the anti-theft protection / alarm system of the present invention can be used as a conventional wireless or wired system with the use of the appropriate cables, radar, contacts, etc, by the provision through the system of appropriate DIN inputs. Moreover the system of the present invention may have an output for connection with a closed circuit television (CCVT) or monitor in case of using the system in large buildings with many monitored sites.

The power supply for the anti-theft protection / alarm system of the present invention can be provided either by a rechargeable battery, particularly in the case of a portable system, or through the electricity network.

According to a further implementation, the anti-theft protection / alarm system can report any malfunction of the system via transmission of SMS message via mobile phone.

Note that all components may reside on a single board of manageable size which can be mounted in any convenient location within an area under surveillance.

The present invention further relates to a method for intrusion detection comprising the following steps:
a) detecting an audio signal via a piezoelectric detector ·
b) amplifying the signal
c) filtering the amplified audio signal using a low pass filter 0-20 Hz ·
d) re-amplification of the filtered signal (infrasonic) by means of a variable rate amplifier
e) converting the re-amplified infrasonic signal to digital signal ·
f) processing of the infrasonic digital signal with regard to the level, duration and energy content and the generation of a digital imprint ·
g) comparing the processed infrasonic digital signal with digital reference signals corresponding to infrasonic predefined events to identify any "abnormal" infrasonic events ·
h) generation of an alarm signal when an "abnormal" infrasonic signal is detected.

### Brief description of Figures

The present invention will be described below by means of an indicative, non-limiting example and with the aid of figures .These show:
Figure 1 shows a graph of an infrasonic noise signal of monitored area (a), infrasonic non usable alarm (b), and infrasonic usable alarm (c).
Figure 2 shows the anti-theft protection / alarm system according to one indicative application of the invention
Figure 3 shows the diagram of the method of detection of intrusions.

### Detailed description of preferred paradigm

Figure 1 shows a representation of three cases of infrasonic signals. Figure 1 (a) is the graph of infrasonic noise signal recorded from the monitored space (baseline infrasonic noise).This signal is non- periodic, and of low level. Figure 1(b) shows the case of non-usable infrasonic signal alarm, which can be produced by random noise created in the space. This signal is non-periodic while on the temporal evolution is strong initially and over time decreases rapidly and converges to the baseline signal. Figure 1(c) shows a indicative infrasonic usable signal due to impact on a surface. The signal in this case is periodic, and can be characterized by the parameters of level, duration and energy content (measured by the integration of the level curve of the infrasonic signal with respect to time).These three parameters represent the infrasonic imprint of the incident which caused the infrasonic signal. An infrasonic signal generated for example by hammering on a wooden surface will differ from the infrasonic signal due to impact on a glass surface, etc. Therefore, it is possible to record and store in the memory of the anti-theft / alarm system of the invention a very large number of infrasonic signals due to different infrasonic events. When the anti-theft protection / alarm system of the invention during operation detects an infrasonic signal, the processor of the system will compare the recorded infrasonic signals with infrasonic reference signals (infrasonic noise baseline, random noise, noise due to impact) and in the case in which the recorded signals will be considered "abnormal" it will generate an alarm. At the same time from the shape of the imprint it will be also possible to identify the cause of the infrasonic signal (impact on a wooden surface, impact on glass, etc.).

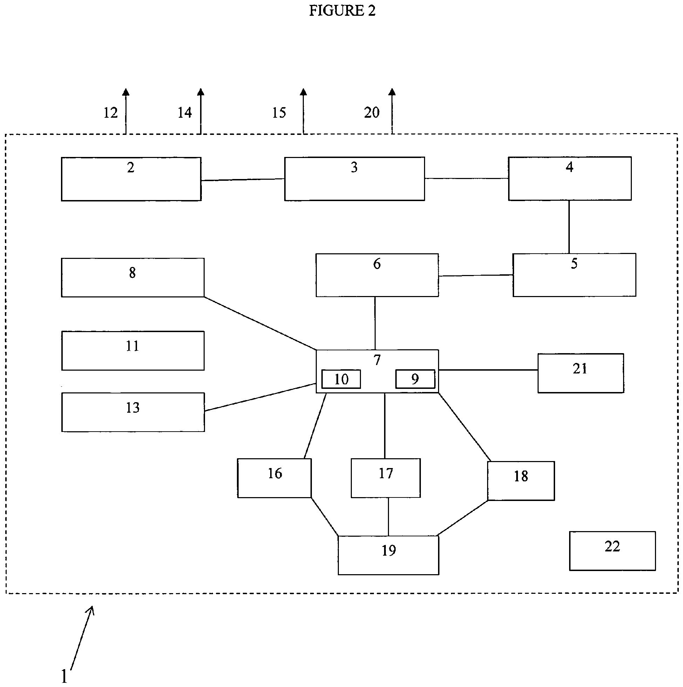

Figure 2 shows an indicative application of anti-theft system / alarm of the present invention, which may take the form of a board of manageable size which can be mounted in any convenient location within a space. The anti-theft protection / alarm **1** in a given area includes piezoelectric sensor **2,** which detects audio signals generated in the space. Audio signals are then re-amplified through amplifier **3**, preferably at least 1000 times. Then the amplified audio signal undergoes filtering through low pass filter **4**, in the range 0-20 Hz, which allows the passage of infrasonic signals (range 0-20 Hz) and cuts off the higher frequency signals. The filtered analog signal is then amplified again through a variable rate amplifier **5**, adjustable in relation to the desired sensitivity and noise level. The re-amplified analog signal is converted through an analog to digital converter **6** to a digital signal, which is then processed by processor **7**, using appropriate software, based on the level and duration of the signal, as mentioned above. The protection system **1** further includes autonomous module **8** to enable / disable it remotely. Activation can be done via mobile phone. When the system detects an intrusion, then an SMS message is sent by the processor module via a message transmission module **9** to a mobile phone, the number of which has been stored beforehand in memory **10**. The protection system **1** has a built-in GPS **11** to monitor its location. The GPS **11** module is useful to protect vehicles from theft and allows the continuous determination of the position thereof. There is a predetermined position for an output **12** for the connection of an external GPS module. Notification of intrusion can be achieved also through conventional siren **13** built into the system. The system includes an output **14** for external siren. The system **1** also has DIN connection **15** to external sensors, radar, magnetic contacts, etc. for the operation as a conventional anti-theft protection / alarm system. The anti-theft protection / alarm system **1** also has internal thermometer **16**, internal light sensor **17**, built-in hygrometer **18** to monitor the conditions of the site. These sensors continuously record the conditions of space and create a signal which notifies the user about changes of the conditions. For example, it will determine if a light was switched on in case of an intrusion, or if the room temperature has increased or decreased in order to take appropriate measures. To enable these sensors, a relay **19** to activate anti-theft protection / alarm system is present. The system supports also 1-wire connection **20** for connecting an external thermometer, hygrometer or lighting sensor. The anti-theft protection / alarm system **1** has additionally a displacement sensor **21**. This sensor will generate a signal when the protection system **1** is moved from its position. The power supply of the system **1** is through battery **22**. Finally, the anti-theft protection / alarm system has a telephone communication installation **23** which will allow for the remote acoustic monitoring of the space via a mobile or fixed telephone.

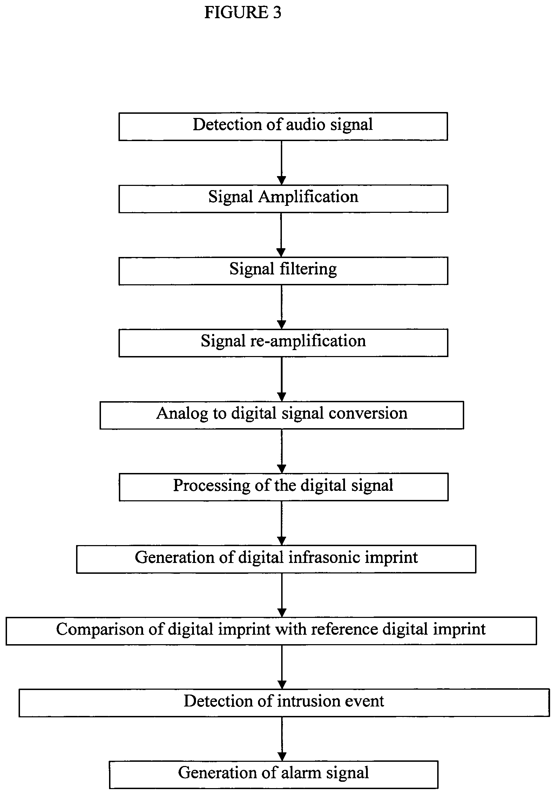

Figure 3 is a graph of the intrusion detection process. The audio signal is detected by the piezoelectric sensor and amplified by the amplifier, preferably at least 1000 times. The amplified signal is filtered by low pass filter and then subjected to further amplification for the reasons explained above. The final amplified signal is converted into a digital signal and processed by the processor. The processor generates a digital imprint of the digital signal and compares it with reference digital imprints stored in memory. If the comparison shows "abnormal" recorded infrasonic signal, it generates a notification for an intrusion event.

The present invention is described with reference to a preferred application. The present invention may be subject to modifications and changes which will fall within the scope of the attached claims.

## Claims

1. An anti-theft protection / alarm system (1), comprising:
a) a piezoelectric sensor (2) to detect an audio signal
b) an amplifier (3) to amplify the detected audio signal ·
c) a low-pass active filter (4) in the range of 0-20 Hz for passing the amplified audio signal in the range of 0-20 Hz and cutting-off of the amplified audio signal of higher frequency ·
d) a variable rate amplifier (5) to amplify the filtered infrasonic ·signal
e) an analog-to-digital converter (6) for converting the re-amplified infrasonic signal into a digital signal
f) a processor (7) for processing and classification of the digital signal with regard to infrasonic reference signals stored in a processor memory, where the assessment takes into account the duration of the infrasonic signal, the signal level of infrasonic signal, and the accumulated energy of infrasonic signal
g) a telephone installation, and
h) means of communication (9).

2. Anti-theft protection / alarm according to claim 1, **characterized in that** as communication means (9) it includes an SMS transmission/reception module for sending messages to mobile phone numbers stored in the memory of the processor.

3. Anti-theft protection / alarm according to claim 1 or 2, **characterized in that** as an alarm means it incorporates an integrated alarm siren.

4. Anti-theft protection / alarm according to claim 2, **characterized in that** the SMS message contains GPS position information.

5. Anti-theft protection / alarm according to any of claims 1 to 2, **characterized in that** it incorporates an appropriate communication module for sending / receiving SMS in order for the system to be activated/de-activated via mobile phone.

6. Anti-theft protection / alarm according to any of claims 1 to 5, **characterized in that** it comprises an alarm button which can be voluntarily activated.

7. Method of detection of a violation/intrusion which includes the following steps:
a) detecting an audio signal via a piezoelectric detector ·
b) enhancing/amplifying the detected audio signal ·
c) filtering the amplified audio signal through a low pass filter in the range of 0-20 Hz ·
d) re-amplifying the filtered infrasonic signal with a variable rate amplifier
e) converting the re-amplified infrasonic signal to a digital infrasonic signal •
f) processing the digital infrasonic signal with regard to the duration of the infrasonic signal, the signal level of the infrasonic signal and the accumulated energy of the infrasonic signal, thereby creating an infrasonic imprint ·
g) comparing the infrasonic imprint with stored infrasonic reference imprints to detect abnormal infrasonic events
h) generation of an alarm upon the detection of an abnormal infrasonic signal.

## Patentansprüche

1. Ein Diebstahlschutz / Alarmsystem (1), umfasst:
a) einen piezoelektrischen Sensor (2) zur Erfassung ein Audiosignal
b) einen Verstärker (3), um das detektierte Audiosignal zu verstärken
c) ein Tiefpass-Aktivfilter (4) im Bereich von 0 bis 20 Hz zum Durchlassen des verstärkten Audiosignals im Bereich von 0 bis 20 Hz und Abschneiden des verstärkten Audiosignals höherer Frequenz.
d) eine variable Verstärkungsrate (5) um das gefilterte Infraschall-Signal zu verstärken
e) Einen Analog-Digital-Wandler(6) zum Umwandeln des reamplifizierten Infraschall-Signals in ein Digitalsignal
f) Einen Prozessor (7) zum Verarbeiten und Klassifizieren des digitalen Signals in Bezug auf Infraschallreferenzsignale, die in dem Prozessorspeicher gespeichert sind, wobei die Bewertung, die Dauer des Infraschall-Signals, den Signallevel des Infraschall-Signals und die akkumulierte Energie des Infraschall-Signals berücksichtigt
g) Eine Telefoninstallation und
h)Kommunikationseinrichtung (9).

2. Diebstahlschutz / Alarm nach Werbeaussage 1, **dadurch gekennzeichnet, dass** es als Kommunikationseinrichtung (9),
ein SMS-Sende- / Empfangsmodul zum Senden von Nachrichten an,
in dem Speicher des Prozessors gespeicherte, Mobiltelefonnummern, enthalten.

3. Diebstahlschutz/Alarm nach Werbeaussage 1 oder 2, **dadurch gekennzeichnet, dass** es als Alarmeinrichtung eine integrierte Alarmsirene enthält.

4. Diebstahlschutz / Alarm nach Werbeaussage 2, **dadurch gekennzeichnet, dass** die SMS-Nachricht GPS-Positionsinformationen enthält.

5. Diebstahlschutz/Alarm nach einer der Werbeaussagen 1 bis 2, **dadurch gekennzeichnet, dass** es ein entsprechendes Kommunikationsmodul zum Senden / Empfangen von SMS enthält,
damit das System über Mobiltelefon aktiviert / deaktiviert werden kann.

6. Diebstahlschutz/Alarm nach einer der Werbeaussagen 1 bis 5, **dadurch gekennzeichnet, dass** es einen Alarmknopf umfasst, der freiwillig aktiviert werden kann.

7. Verfahren zum Nachweis von Aufbruch / Eindringen, das die folgenden Schritte umfasst:
a) Erfassen eines Audiosignals über einen piezoelektrischen Detektor
b) Verstärken des detektierten Audiosignals
c) Filtern des verstärkten Audiosignals durch ein Tiefpassfilter im Bereich von 0-20 Hz
d) Erneutes Verstärken des gefilterten Infraschall-Signals mit einer variablen Verstärkungsrate.
e) Umwandeln des erneut verstärkten Infraschall-Signals in ein digitales Infraschall-Signal.
f) Verarbeiten des digitalen Infraschall-Signals in Bezug auf die Dauer des Infraschall-Signals, des Signallevels des Infraschall-Signals und der akkumulierten Energie des Infraschall-Signals, wodurch ein Infraschalldruck erzeugt wird.
g) Vergleichen des Infraschalldrucks mit gespeicherten Infraschallreferenzdrucken, um anormale Infraschallereignisse festzustellen.
h) Erzeugung eines Alarms bei Detektion eines anormalen Infraschall-Signals.

## Revendications

1. Un système (1) de protection de vol /alarme compenant :
a) uncapteurpiézoélectrique (2) qui détecte un signal audio
b) un amplificateur (3) pour amplifier le signal audio détecté
c) unfiltreactifpasse-bas (4) à la zone de 0 -20 Hz qui permetpasser le signal audio amplifiédans la zone de 0 -20 Hz and coupe le signal amplifié de fréquencesupérieure
d) unamplificateur à taux variable (5) pour amplifier le signal filtréinfrason
e) Un convertisseur analogique-numérique (6) qui fait la conversion du signal infrason ré-amplifié à un signal numérique
f) un processeur (7) pour letraitement et la classification du signal numériquepar rapport aux signaux infrason stockés à la mémoiredu processeur, qui fait l'evaluation suivant la durée du signal infrason, le niveau du signal infrason et l'énergie accumulée du signal infrason
g) untéléphoneinstallé, et
h)moyens de communication (9).

2. Le système de protection de vol /alarme suivant la revendication 1, **est caractérisé comme** unmoyen de communication (9)
comprenant un module de transmission/réception SMS pour envoyer des messages aux numéros de
téléphoneportables stockésà la mémoiredu processeur.

3. Le système de protection de vol /alarme suivant la revendication 1 ou 2, **est charactérisé comme** unmoyenalarme qui incorporeunesirèned'alarmeintégrée.

4. Le système de protection de vol /alarme suivant la revendication 2, **est charactérisé en cela** le message SMS contient l'information de position GPS.

5. Le système de protection de vol /alarme suivantquelconque des revendications 1 à 2, **est charactérisé en cela** incorpore un module de communication pour envoyer/récevoir SMS à fin de pouvoirétreactivé / désactivépar un téléphoneportable.

6. Le système de protection de vol /alarme suivantquelconque des revendications 1 à 5, **est charactérisé en cela** comprend un bouton qui peutêtreactivévolontairement d' alarme.

7. Méthode de détection d' une 2 violation / intrusion qui comprend les étapes suivantes :
a) ladétection un signal audio par un capteurpiézoélectrique
b) l'amélioration / amplification du signal audio détecté
c) lefiltrage du signal audio amplifié par un filtrepasse-basdans la zone de 0-20Hz
d) la re-amplification du signal infrasonfiltré par un amplificateurdébit variable
e) la conversion du signal infrason re-amplifié à un signal infrasonnumérique
f) letraitement du signal infrasonnumériqueence qui concerne la durée du signal infrason, le niveau du signal infrason, ainsila creation d' une image infrason
g) lacomparaison de l'image infrason par rapport aux images de référencestockéesà fin de détecter de événementsinfrasonanormals
h) lagénération d' un alarme suivant la détection d'un signal infrasonanormal.
